Europäisches Patentamt

**European Patent Office**

**Office européen des brevets**

(19)

(11) Numéro de publication : **0 129 854
B1**

# (12) FASCICULE DE BREVET EUROPÉEN

(45) Date de publication du fascicule du brevet :
**11.11.87**

(21) Numéro de dépôt : **84107122.8**

(22) Date de dépôt : **20.06.84**

(51) Int. Cl.⁴ : **C 01 B 13/02**, B 01 J 7/02

(54) Procédé et appareil pour la production de produits gazeux par décomposition de liquides.

(30) Priorité : **27.06.83 FR 8310714**

(43) Date de publication de la demande :
**02.01.85 Bulletin 85/01**

(45) Mention de la délivrance du brevet :
**11.11.87 Bulletin 87/46**

(84) Etats contractants désignés :
**AT BE CH DE GB IT LI NL SE**

(56) Documents cités :
**FR-A- 2 172 245**

(73) Titulaire : **INTEROX Société Anonyme
Rue du Prince Albert, 33
B-1050 Bruxelles (BE)**

(72) Inventeur : **Coeckelberghs, Paul
Jagersdal, 56
B-1600 Sint-Pieters-Leeuw (BE)**
Inventeur : **Depoorter, Willy
Rue du Wimpelberg, 38
B-1120 Bruxelles (BE)**

(74) Mandataire : **Meyer-Roxlau, Reiner Ferdinand, Dipl.-Ing. et al
Patentanwälte Dr. Franz Lederer Dipl.-Ing. Reiner F. Meyer-Roxlau Lucile-Grahn-Strasse 22
D-8000 München 80 (DE)**

## Description

La présente invention concerne un procédé pour la production de produits gazeux par décomposition de liquides. Elle concerne plus particulièrement un procédé pour la production d'oxygène par décomposition de peroxyde d'hydrogène. Elle concerne également un appareil pour la mise en œuvre dudit procédé.

Pour pouvoir utiliser de l'oxygène gazeux, il faut habituellement disposer de réservoirs de stockage qui doivent être maintenus sous pression ce qui nécessite un appareillage relativement compliqué, coûteux et encombrant. Ces inconvénients sont parfois prohibitifs. Il en est ainsi lorsque l'oxygène est destiné à être utilisé comme comburant dans des postes de soudage ou de découpage portables.

Aussi a-t-on proposé dans la demande de brevet européen EP-A-0 007 118 déposée le 18 avril 1979 au nom de B. B. R. Instruments de générer l'oxygène par décomposition catalytique du peroxyde d'hydrogène dans un appareil particulier. Cet appareil, bien que très efficace, présente cependant certains inconvénients. Ainsi, le débit d'oxygène et l'efficacité diminuent progressivement au cours du temps et les performances de l'appareil sont très différentes selon l'origine de la solution du peroxyde d'hydrogène mise en œuvre. En outre, la chaleur dégagée par la décomposition du peroxyde d'hydrogène s'élimine mal et l'oxygène formé contient des quantités appréciables de vapeur d'eau ce qui nuit à la stabilité et à la température de la flamme du chalumeau. Enfin la conception de l'appareil implique le maintien d'un volume mort non négligeable de solution aqueuse de peroxyde dans le réservoir de stockage.

Dans le document FR-A-2 172 245 on décrit un procédé et un dispositif pour l'obtention de produits gazeux par décomposition de liquides dans un réacteur alimenté en liquide par un réservoir intermédiaire comportant deux enceintes séparées par une cloison et communiquant via un conduit muni d'un clapet anti-retour : L'amenée du liquide dans le réservoir intermédiaire se fait à partir d'un réservoir de stockage du liquide via un conduit muni d'une vanne de réglage de débit asservie à la pression du gaz produit.

Le fonctionnement du dispositif comprend plusieurs phases temporelles distinctes pendant lesquelles la différence de pression entre l'entrée et la sortie du réacteur de décomposition varie comme la différence de pression hydrostatique due aux niveaux différents du liquide dans les deux enceintes lorsque celles-ci sont en communication et comme la variation de niveau dans la seconde enceinte lorsque celle-ci est isolée de la première.

La présente invention vise à procurer un procédé et un appareil pour générer un produit gazeux tel que l'oxygène par décomposition d'un liquide tel que le peroxyde d'hydrogène qui ne présentent pas les inconvénients des procédés et des appareils connus. Le procédé selon l'invention permet ainsi par exemple de générer de l'oxygène gazeux avec un débit sensiblement constant sans observer de désactivation du catalyseur et sans que le procédé soit tributaire de la qualité de la solution de peroxyde d'hydrogène. Il permet aussi d'obtenir de l'oxygène gazeux à une pression suffisante pour qu'il puisse être utilisé notamment comme comburant dans un poste de soudage. Enfin, le procédé selon l'invention peut, si nécessaire, être utilisé sans devoir faire appel à aucune source d'énergie extérieure.

L'appareil utilisé pour réaliser le procédé selon l'invention peut être autonome et portable. Il peut, si nécessaire, avoir des dimensions extérieures très réduites et être de ce fait aisément manipulé. En outre, son utilisation n'entraîne aucun risque. Lorsque l'appareil selon l'invention est utilisé pour générer de l'oxygène destiné à être employé comme comburant dans des postes de soudage, on obtient des flammes très chaudes et très stables.

La présente invention concerne à cet effet un procédé continu pour l'obtention d'un produit gazeux par réaction d'un réactif liquide selon lequel on introduit en continu le réactif liquide dans un réacteur pour obtenir un produit gazeux et un produit liquide et dans lequel on maintient constante la différence positive entre la pression à l'entrée du réacteur et la pression à la sortie du réacteur.

Le procédé selon l'invention est particulièrement avantageux lorsque la réaction nécessite la mise en œuvre de particules solides à la température de la réaction, servant par exemple de réactif ou de catalyseur, que l'on dispose dans le réacteur. De bons résultats ont été obtenus lorsque le réacteur contient des particules solides de catalyseur.

Par réactif liquide, on entend désigner un réactif ou un mélange de réactifs qui sont liquides par eux-mêmes ou qui se présentent sous forme d'une solution dans au moins un solvant adéquat à la température à laquelle ils pénètrent dans le réacteur. En général, on entend désigner des réactifs qui sont liquides ou sous la forme d'une solution à la température ambiante. Lorsque le réactif liquide se présente sous la forme d'une solution dans un solvant, le solvant est choisi parmi ceux qui sont inertes vis-à-vis de la réaction et qui sont capables de dissoudre au moins 5 % et de préférence au moins 10 % de leur poids de réactifs. De bons résultats ont été obtenus avec des réactifs liquides se présentant sous la forme d'une solution dans un solvant. En général, on choisit un solvant qui dissout moins de 10 % du produit gazeux à la température ambiante. Un exemple de solvant adéquat est l'eau.

Par produit gazeux, on entend désigner un produit ou un mélange de produits qui sont gazeux à la température ambiante et qui sont formés par réaction des réactifs liquides.

Par produit liquide, on entend désigner un produit ou un mélange de produits qui se présentent sous forme liquide à la température ambiante. Il peut s'agir d'un produit formé par la réaction qui soit liquide par lui-même, d'un solvant liquide ou d'une solution dans au moins un solvant dans laquelle le produit formé par la réaction et éventuellement le réactif non transformé sont dissous.

Par différence positive entre la pression à l'entrée du réacteur et la pression à la sortie du réacteur, on entend désigner la différence de pression que l'on a lorsque les niveaux du réactif liquide à l'entrée du réacteur et du produit liquide à la sortie du réacteur sont les mêmes c'est-à-dire dans le cas d'un réacteur disposé horizontalement. Si ces niveaux d'entrée et de sortie sont différents, cette différence de pression est corrigée d'une valeur égale à la pression correspondant au poids d'une colonne de réactif liquide dont la hauteur est égale à la différence de niveau entre l'entrée du réactif liquide et la sortie du produit liquide, cette correction étant positive quand l'entrée du réactif liquide est à un niveau inférieur à celle de la sortie du produit liquide et négative dans le cas contraire.

La différence de pression entre l'entrée et la sortie du réacteur, pour autant qu'elle soit constante tout au cours de la réalisation du procédé selon l'invention, peut néanmoins être ajustée à des valeurs différentes selon la nature et la composition des réactifs liquides, selon les réacteurs utilisés (formes, remplissage, perte de charge, etc.) et selon les formes et dimensions des corps solides tels que des catalyseurs, éventuellement disposés dans le réacteur.

En général, pour un réacteur disposé horizontalement, la différence de pression entre l'entrée et la sortie du réacteur est d'au moins 0,0001 MPa et de préférence d'au moins 0,000 3 MPa. Elle peut avoir des valeurs beaucoup plus élevées, mais, d'un point de vue pratique, elle ne dépasse en général pas 0,05 MPa et de préférence pas 0,01 MPa. En général, on veille à ce que la différence de pression varie de moins de 20 % et de préférence de moins de 10 % en cours de fonctionnement.

La pression des gaz produits par le procédé selon l'invention peut être variable. La pression absolue est en général d'au moins 0,1001 MPa et le plus souvent d'au moins 0,101 MPa. En général, pour des raisons pratiques elle ne dépasse pas 1 MPa et de préférence pas 0,6 MPa. Bien entendu, ces valeurs dépendent de manière classique des débits de réactif liquide envoyé au réacteur et de la dimension du réacteur.

Pour maintenir constante la différence de pression entre l'entrée et la sortie du réacteur, on peut utiliser diverses techniques. On peut ainsi avoir recours à un réservoir intermédiaire à niveau constant pour l'alimentation du réactif liquide. Ce réservoir est disposé de manière à ce que le niveau du réactif liquide soit situé à un niveau supérieur à celui de l'entrée du réacteur et le ciel de ce réservoir est mis en contact avec la phase gazeuse recueillie à la sortie du réacteur. Dans ce cas, la différence de pression entre l'entrée et la sortie du réacteur est assurée par le poids de la colonne de réactif liquide dans le réservoir intermédiaire.

Cette technique très simple est particulièrement avantageuse car elle permet de ne pas avoir recours à des sources d'énergie extérieures.

On peut également assurer une différence de pression constante entre l'entrée et la sortie du réacteur à l'aide d'une pompe dont il est possible de régler la pression de fonctionnement. Dans ce cas, on mesure la pression à la sortie du réacteur à l'aide d'un indicateur de pression et on règle en conséquence la pression à l'entrée du réacteur à l'aide de la pompe. Un tel réglage peut se faire manuellement ou automatiquement par toute méthode connue par elle-même.

Pour effectuer la réaction, on peut utiliser divers types de réacteurs. On utilise de préférence des réacteurs dans lesquels le réactif liquide s'écoule horizontalement. On peut ainsi utiliser un ou plusieurs réacteurs tubulaires placés horizontalement dans lesquels on peut disposer des particules solides intervenant dans la réaction. Lorsque les particules solides sont consommées ou progressivement désactivées par la réaction, on peut avantageusement les disposer dans des cartouches dont les parois sont pourvues d'ouvertures de manière à permettre l'écoulement du réactif liquide au travers de la cartouche. Lorsque les particules solides sont consommées ou désactivées, il suffit alors de remplacer ces cartouches.

On peut utiliser des réacteurs complètement ou partiellement noyés. Il est avantageux de ménager dans la partie supérieure du réacteur une zone qui n'est pas noyée, qui ne contient pas de particules solides intervenant dans la réaction et dans laquelle le produit gazeux peut se libérer.

Cette technique permet d'éliminer le produit gazeux au fur et à mesure qu'il est formé par la réaction. Une telle technique présente de nombreux avantages. Elle permet d'augmenter le taux de transformation parce que l'un des produits de la réaction quitte le milieu réactionnel et parce que le contact entre le réactif liquide et les particules solides est meilleur lorsqu'on élimine le produit gazeux formé.

Par ailleurs, comme la réaction génère simultanément un produit gazeux et un produit liquide on sépare ainsi immédiatement les deux produits formés que l'on peut, si nécessaire recueillir en des endroits distincts.

En outre, si la réaction est exothermique on peut pourvoir la zone non noyée du réacteur de dispositifs d'échanges thermiques, pour éviter que le produit liquide formé ne se vaporise complètement et pour contrôler la température du produit gazeux formé.

On peut donc, selon le type de réacteur utilisé, recueillir soit un mélange de produits gazeux et liquides qui peut se présenter sous la forme d'une phase gazeuse unique si sa température est suffisamment élevée ou sous la forme d'un mélange de vapeurs et de liquides, soit distinctement une phase gazeuse qui comprend essentiellement le produit gazeux et une phase liquide qui comprend essentiellement le produit liquide.

Lorsque la réaction est exothermique, il est important de prévoir un système d'évacuation des calories efficaces. Si nécessaire, les produits recueillis à la sortie du réacteur peuvent être envoyés dans une zone de condensation ou une zone de refroidissement. Celles-ci comportent en général au moins un échangeur de chaleur et au moins un séparateur de liquide. On peut utiliser divers types d'échangeurs de chaleur connus par eux-mêmes et comportant des surfaces d'échange thermique de tous types telles que des plaques, des serpentins, etc. On peut également utiliser des échangeurs à un ou plusieurs étages. On peut, de manière avantageuse faire passer les produits de la réaction dans un ou plusieurs tubes de faible section, de grande longueur et éventuellement pourvus de plaques, ailettes, etc., pour améliorer l'échange thermique qui sont refroidis par simple contact avec l'air ambiant. Comme séparateurs de liquide, on peut utiliser divers appareils connus par eux-mêmes tels que des dégoutteletteurs.

Le procédé selon l'invention peut être utilisé pour la réalisation de diverses réactions dans lesquelles on met en œuvre un réactif liquide pour obtenir un produit gazeux et un produit liquide. Il convient particulièrement bien pour l'obtention d'oxygène par décomposition catalytique de peroxyde d'hydrogène. Dans ce cas, on introduit une solution aqueuse de peroxyde d'hydrogène dans un réacteur contenant des particules solides d'un catalyseur de décomposition du peroxyde d'hydrogène pour former un mélange contenant de l'oxygène et de la vapeur d'eau, on refroidit le mélange ainsi obtenu dans une zone de condensation de manière à former une phase gazeuse contenant essentiellement de l'oxygène et une phase liquide contenant essentiellement de l'eau que l'on rejette, et on maintient constante la différence positive entre la pression de la solution aqueuse de peroxyde d'hydrogène à l'entrée du réacteur et la pression de la phase gazeuse contenant essentiellement de l'oxygène dans la zone de condensation à la sortie du réacteur.

L'oxygène formé dans le procédé selon l'invention est en général épuré avant d'être utilisé. A cette fin, on refroidit le mélange recueilli à la sortie du réacteur dans une zone de condensation de manière à éliminer l'eau formée par la réaction. Ce mélange est ainsi envoyé dans un échangeur de chaleur et dans un séparateur d'eau.

Lorsque le réacteur est de faibles dimensions et que les débits d'oxygène ne sont pas trop élevés, on peut envoyer le mélange issu du réacteur dans un récipient pourvu d'un robinet de vidange, qui servira à la fois d'échangeur de chaleur et de séparateur d'eau. Ce récipient est en général situé au même niveau ou à un niveau inférieur à celui du réacteur de manière à ce que l'eau condensée puisse être rejetée par gravité. Le plus souvent ce récipient est situé sous le réacteur. Souvent, on dispose un échangeur de chaleur supplémentaire sur la conduite de sortie de l'oxygène pour éliminer les dernières traces de vapeur d'eau entraînées par l'oxygène. L'emploi d'un échangeur de chaleur supplémentaire est particulièrement utile lorsque l'oxygène est destiné à alimenter un poste de soudage car il permet d'éviter la formation de gouttelettes d'eau qui seraient projetées dans la flamme du chalumeau.

Les solutions aqueuses de peroxyde d'hydrogène mises en œuvre peuvent avoir des concentrations variables. En général, on utilise des solutions contenant de 10 à 75 % et le plus souvent de 15 à 65 % en poids de peroxyde d'hydrogène. De bons résultats sont obtenus avec des solutions commerciales concentrées qui contiennent en général environ 35 % en poids de peroxyde d'hydrogène. Les solutions de peroxyde d'hydrogène peuvent si nécessaire contenir divers additifs habituels. Elles peuvent ainsi contenir des stabilisants connus par eux-mêmes tels que des acides phosphoriques ou phosphoniques et leurs dérivés tels que leurs sels et plus particulièrement le pyrophosphate de sodium ou le pyrophosphate acide de sodium. Elles peuvent également contenir des inhibiteurs de corrosion et des agents passivants connus par eux-mêmes tels que le nitrate d'ammonium ou le stannate de sodium. Elles peuvent aussi contenir des agents antimousses.

Pour réaliser la décomposition du peroxyde d'hydrogène en eau et en oxygène on peut utiliser divers types de catalyseurs connus à cette fin. On peut ainsi utiliser des éléments des périodes 4, 5 et 6 des groupes 1b, 2b, 4a, 5a, 6a et b, 7a et b, et 8 de la Classification Internationale des éléments et leurs dérivés. De bons résultats ont été obtenus avec des catalyseurs à base de métaux tels que l'or, l'argent, le platine, le palladium, le manganèse, le fer, le chrome, le cuivre, le cobalt et le plomb ainsi que leurs dérivés tels que leurs oxydes et leurs sels. Des résultats avantageux ont été obtenus avec des catalyseurs à base de plomb, de platine ou de palladium ainsi que leurs dérivés. Le platine a donné d'excellents résultats. d'autres catalyseurs connus par eux-mêmes peuvent également être utilisés et on peut utiliser des mélanges de catalyseurs différents.

Les catalyseurs peuvent être disposés tels quels dans le réacteur ou ils peuvent être disposés sur des supports adéquats connus par eux-mêmes. Ils peuvent être fixés sur les supports soit physiquement soit chimiquement. Divers supports peuvent être utilisés. On peut ainsi utiliser des supports choisis parmi les silices, les alumines, les silices-alumines, le charbon actif, la pierre ponce, les zéolites, les bentonites, le carborundum, les terres à diatomées, les terres à foulons et les supports métalliques poreux. En général, on choisit des supports présentant une bonne résistance thermique et une bonne résistance mécanique qui ne subissent pas d'attrition et qui n'éclatent pas sous l'influence de la pression générée par la fonction du produit gazeux dans les pores du support. Les supports doivent en outre résister chimiquement aux réactifs mis en œuvre et aux

produits formés.

De bons résultats ont été obtenus avec des supports choisis parmi les alumines, les silices et les silices-alumines.

Le platine déposé sur de l'alumine à raison de 1 % de son poids a donné d'excellents résultats lors de la décomposition du peroxyde d'hydrogène.

Les particules de catalyseur peuvent se présenter sous diverses formes. On peut ainsi utiliser des barrettes, tablettes, extrudats, granulés ou sphères. En général, pour éviter des pertes de charge, on utilise des particules de dimensions supérieures à 0,05 cm et le plus souvent supérieures à 0,1 cm. En général, leur plus grande dimension ne dépasse pas 20 cm sans que cette limite ne soit critique.

Lorsque le procédé selon l'invention est appliqué à la production d'oxygène par décomposition du peroxyde d'hydrogène, les différentes parties de l'appareil utilisé à cette fin qui sont en contact avec le peroxyde d'hydrogène, éventuellement sous forme de traces, sont réalisées de manière avantageuse en des matériaux qui résistent à la corrosion par le peroxyde d'hydrogène. L'aluminium, le verre et certains polymères tels que le polypropylène, le polytétrafluoréthylène, le polyéthylène, le poly-1,1-difluoroéthylène, etc., conviennent bien à cet usage.

Le procédé selon l'invention peut être utilisé pour générer de l'oxygène convenant pour divers usages. Il peut être ainsi utilisé pour générer de l'oxygène pour des postes de soudage portables, pour générer de l'oxygène pour des inhalateurs permettant d'enrichir l'air en oxygène à des doses variables allant en général de 28 à 50 % et le plus souvent de 25 à 40 % en poids en oxygène et également pour générer de l'oxygène pour des piles à combustible.

L'invention concerne également un procédé pour la génération d'oxygène pour la production de flammes convenant pour le soudage ou le découpage.

L'invention concerne également des appareils convenant pour la production de produits gazeux selon le procédé de l'invention et comportant un dispositif pour maintenir constante la différence positive entre la pression è l'entrée du réacteur et la pression à la sortie du réacteur.

Dans un appareil autonome, un réservoir de stockage du réactif liquide placé à un niveau élevé alimente un réservoir intermédiaire à niveau constant ; ce dernier alimente un réacteur disposé horizontalement et garni de particules solides par l'intermédiaire d'une canalisation comportant une vanne à débit réglable et un clapet anti-retour pour le contenu du réacteur ; le réacteur se trouve à un niveau inférieur au niveau constant du réservoir intermédiaire ; une canalisation raccorde la sortie du réacteur à un récipient comportant un moyen de vidange ; deux canalisations relient le ciel du récipient respectivement au ciel du réservoir intermédiaire par une conduite d'équilibrage de pression comportant un clapet anti-retour pour le contenu du réservoir intermédiaire et à un échangeur de chaleur qui est lui-même raccordé à la sortie de l'appareil.

Dans un autre appareil, un réservoir de stockage du réactif liquide alimente, par l'intermédiaire d'une canalisation comportant une pompe à pression réglable, un réacteur disposé horizontalement et garni de particules solides ; une canalisation raccorde la sortie du réacteur à un récipient comportant un moyen de vidange ; deux canalisations relient le ciel du récipient respectivement à un dispositif de mesure de pression qui permet de régler la pompe à pression réglable et à un échangeur de chaleur qui est lui-même raccordé à la sortie de l'appareil.

Le récipient comportant un moyen de vidange tel qu'un robinet peut se situer à différents niveaux. En général, il se trouve à un niveau égal ou inférieur et de préférence inférieur à celui du réacteur.

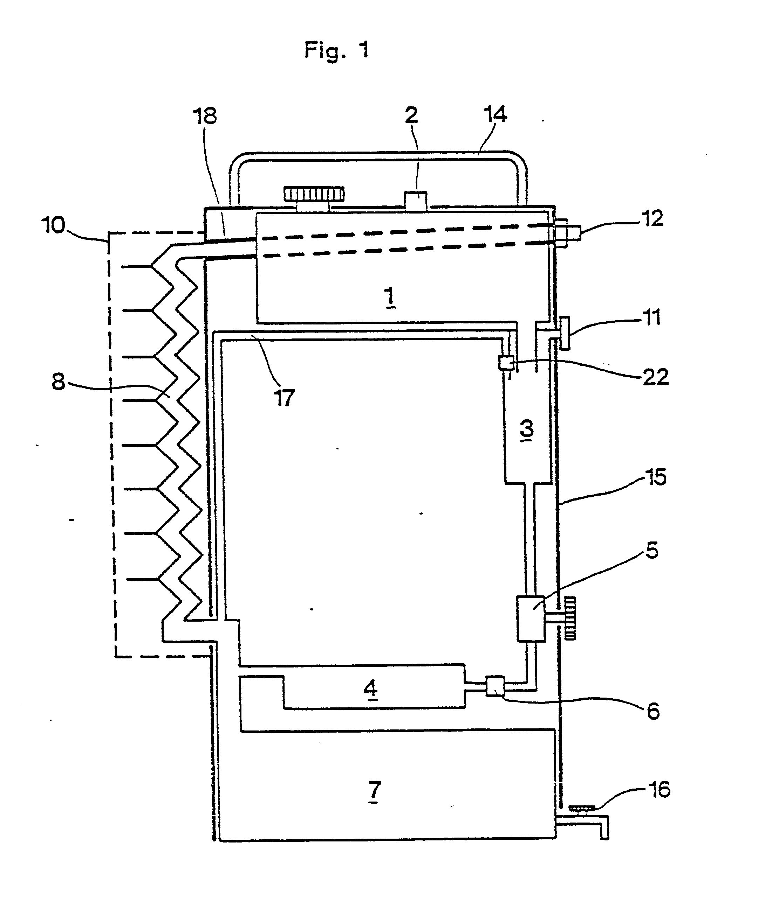

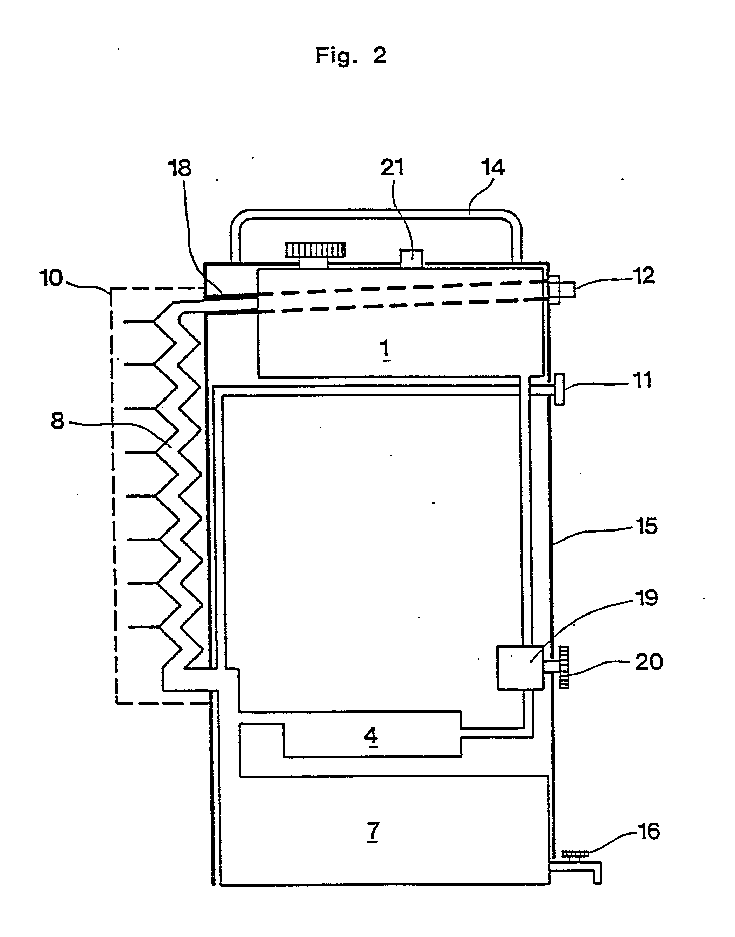

Le procédé selon l'invention peut avantageusement être réalisé dans des appareillages tels que ceux représentés aux figures 1 et 2 en annexe qui représentent des manières différentes de réaliser le procédé selon l'invention.

La figure 1 représente un appareil convenant pour la production d'un produit gazeux par décomposition catalytique d'un réactif liquide qui comporte un petit réservoir intermédiaire d'alimentation 3 à niveau constant alimenté par un réservoir de stockage 1. Une soupape de sécurité 2 est disposée dans le réservoir de stockage. Le réacteur 4, dans lequel est disposé le catalyseur de décomposition est alimenté en réactif liquide par l'intermédiaire d'une vanne de réglage à débit réglable 5. Un clapet anti-retour 6, placé entre le réacteur et la vanne de réglage, empêche la pression générée dans le réacteur de refouler le réactif liquide vers l'amont. Dans le récipient 7 on recueille le produit liquide formé par la réaction de décomposition du réactif liquide. Un robinet de vidange 16 permet de prélever le produit liquide. Le produit gazeux formé par la décomposition du réactif liquide passe dans un échangeur de chaleur 8 dans lequel on condense le produit liquide entraîné par le produit gazeux. Une grille 10 protège l'échangeur de chaleur. Le produit gazeux passe dans une canalisation 18 isolée thermiquement et sort en 12. Par la canalisation 17 on équilibre les pressions entre la sortie du réacteur et le ciel du réservoir intermédiaire d'alimentation 3. Un clapet anti-retour 22 sépare la canalisation 17 du réservoir intermédiaire d'alimentation 3 pour éviter que le réactif liquide puisse passer du réservoir 3 dans la canalisation 17, un indicateur 11 permet de contrôler la pression. L'appareil est disposé dans un boîtier 15 pourvu d'une poignée 14.

Le mode de réalisation du procédé représenté à la figure 1 est particulièrement avantageux car il ne fait appel à aucune source d'énergie extérieure et est ainsi complètement autonome.

Dans l'appareil présenté à la figure 2 on a remplacé l'alimentation au moyen d'un réservoir intermédiaire à niveau constant de la figure 1 par une pompe à pression réglable 19 permettant d'ajuster la pression, à l'aide du pressiostat 20. Le réservoir de stockage 1 est mis à l'air en 21.

Les appareillages représentés aux figures 1 et 2 peuvent également être utilisés pour faire réagir un réactif liquide avec des particules de réactif solide. Dans ce cas les particules de réactif solide sont disposées dans le réacteur 4.

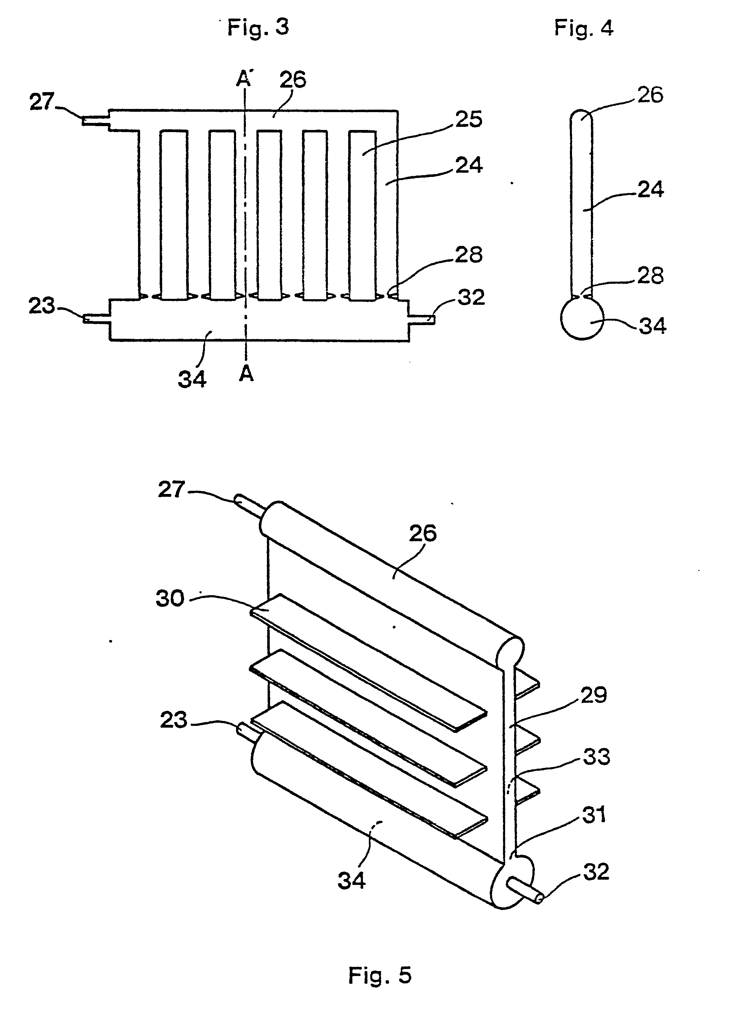

Le procédé selon l'invention peut avantageusement être réalisé dans des réacteurs tels que ceux représentés aux figures 3 à 5 en annexe.

La figure 3 représente une vue en élévation en coupe d'un réacteur. Le réactif liquide pénètre par la voie 32 dans la zone de réaction 34 où sont disposées les particules solides de catalyseur ou de réactif. Le produit gazeux est libéré par les tubulures verticales 24 disposées dans la partie supérieure de la zone de réaction. Le produit gazeux est rassemblé dans la tubulure horizontale 26 et collecté en 27. Des étranglements 28 sont prévus au bas des tubulures verticales pour éviter que les particules solides de catalyseur ou de réactif ne soient entraînées dans lesdites tubulures. Le produit liquide quitte le réacteur en 23. Les espaces 25 entre tubulures assurent l'échange thermique.

La figure 4 représente une vue de profil en coupe suivant le plan AA' de la figure 3.

La figure 5 représente une vue en perspective d'un autre réacteur. Le réactif liquide pénètre par la voie 32 dans la zone de réaction 34 où sont disposées les particules solides de catalyseur ou de réactif. Le produit gazeux est libéré par la fente horizontale 31 disposée dans la partie supérieure de la zone de réaction et passe au travers d'une enceinte 33 faisant fonction d'échangeur thermique et fermée aux extrémités par les parois 29. Les parois latérales de cet échangeur sont pourvues d'ailettes 30. Le produit gazeux est rassemblé dans la tubulure horizontale 26 et collecté en 27.

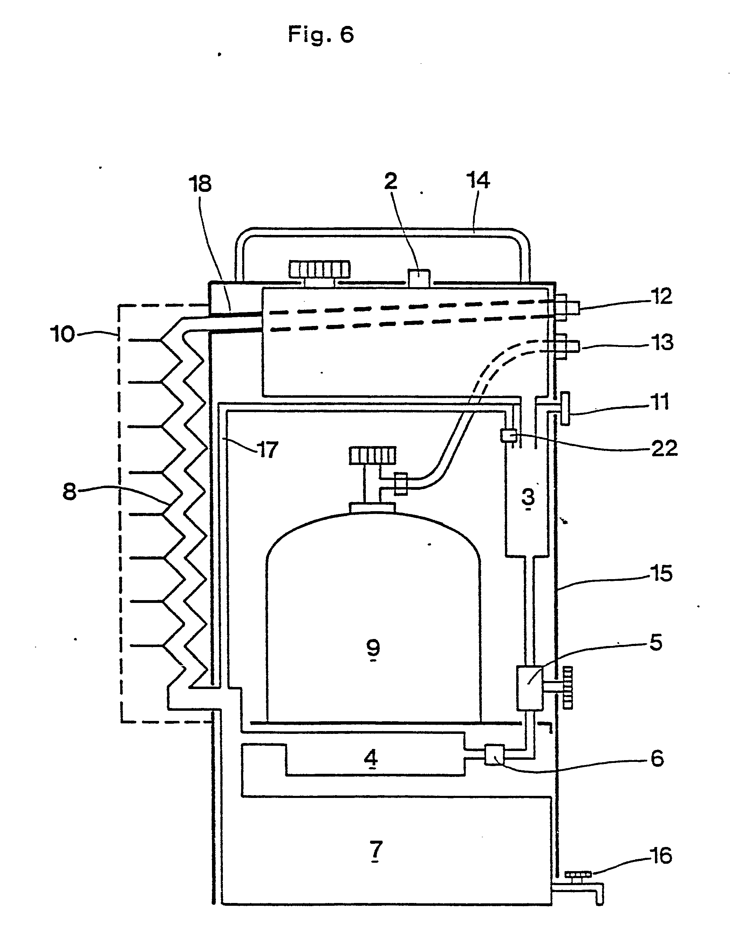

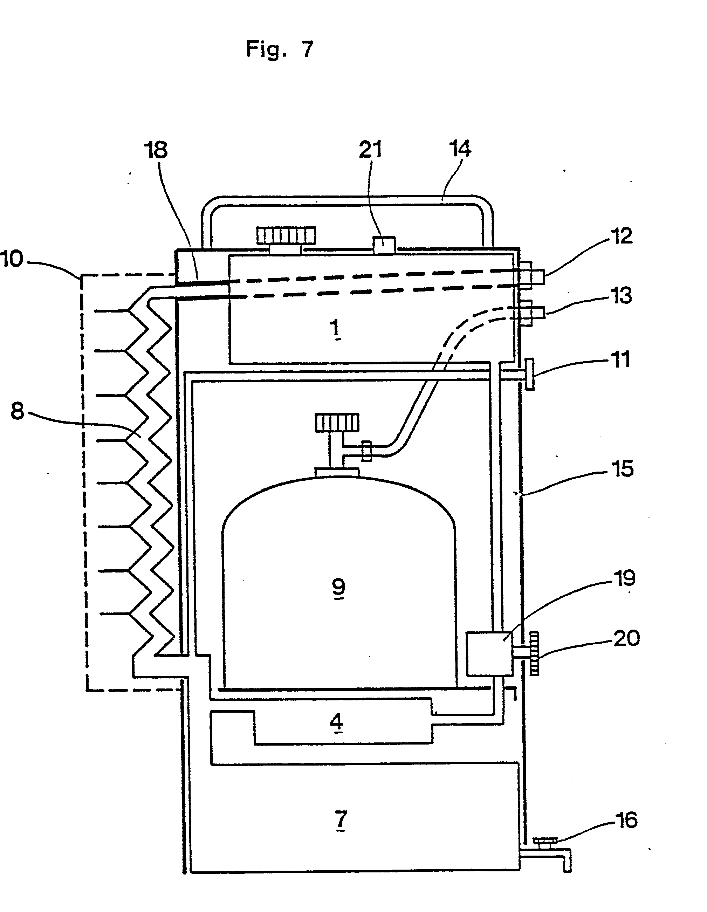

Lorsque le procédé selon l'invention est utilisé pour générer de l'oxygène pour des postes de soudage, on peut utiliser des appareillages tels que ceux présentés aux figures 6 et 7 en annexe qui représentent des manières différentes de réaliser un poste d'alimentation portable pour le soudage au moyen d'une flamme oxygène/gaz combustible.

La figure 6 représente un poste d'alimentation dans lequel l'oxygène est généré selon le schéma présenté à la figure 1. Dans cet appareil, le gaz combustible provient de la bonbonne 9 et sort en 13. Ce poste d'alimentation est particulièrement avantageux car il est complètement autonome.

La figure 7 représente un poste d'alimentation similaire dans lequel l'oxygène est généré selon le schéma présenté à la figure 2.

Afin d'illustrer l'invention on donne ci-après des exemples de réalisation du procédé selon l'invention (exemples 2 à 4) ainsi qu'un exemple de comparaison (exemple 1).

Exemple 1

L'essai a été réalisé dans un petit appareil commercial très semblable à celui décrit aux figures 2 et 3 de la demande de brevet européen EP-A-0 007 118 précitée à la différence près que le ciel du réservoir de stockage de la solution aqueuse de peroxyde d'hydrogène n'est pas raccordé à la bouteille de gaz liquéfié (butane) 9 mais bien à la sortie de l'oxygène gazeux par la voie 12.

On a utilisé une solution aqueuse commerciale de peroxyde d'hydrogène à 35 %. Le réacteur réalisé en aluminium a un volume d'environ 40 cm$^3$ et contient comme catalyseur 150 g de barrettes de plomb molletées (teneur en Pb : 99,5 %) de 13 à 15 cm de longueur, de 3 mm de largeur et de 1 mm d'épaisseur.

La solution aqueuse de peroxyde d'hydrogène est introduite dans le réacteur en continu pendant 45 minutes et le débit d'oxygène produit est mesuré au cours du temps. Après 5 minutes de fonctionnement, ce débit est de 240 l · h$^{-1}$ tandis qu'après 45 minutes il est tombé à 150 l · h$^{-1}$ ce qui est insuffisant pour avoir une flamme suffisamment chaude pour le soudage, le débit minimum pour avoir une flamme ayant une bonne température étant de 180 l · h$^{-1}$.

Exemple 2

L'essai a été réalisé dans un appareil tel que celui représenté à la figure 1. Le niveau constant du réservoir intermédiaire (3) est situé à 25 cm du niveau de l'entrée du réacteur.

On a utilisé la même solution aqueuse de peroxyde d'hydrogène qu'à l'exemple 1. Le réacteur (4), d'un volume d'environ 40 cm$^3$ contient comme catalyseur 150 g de barrettes de plomb molleté comme celles utilisées à l'exemple 1.

La solution aqueuse de peroxyde d'hydrogène est introduite en continu dans le réacteur (4) pendant 24 minutes et le débit d'oxygène produit est mesuré au cours du temps. Après 7 minutes de fonctionnement, ce débit est de 360 l · h$^{-1}$. Après 24 minutes, il est de 360 l · h$^{-1}$. Il n'y a donc pas eu de modification sensible du débit au cours du temps.

Exemple 3

L'essai a été réalisé dans un appareil tel que celui représenté à la figure 2. On a utilisé une pompe MASTERFLEX (19) assurant une pression de 180 mm Hg.

On a utilisé la même solution aqueuse de peroxyde d'hydrogène qu'aux exemples 1 et 2, le même réacteur (4) et le même catalyseur.

La solution aqueuse de peroxyde d'hydrogène est introduite en continu dans le réacteur (4) pendant 25 minutes et le débit d'oxygène produit est mesuré au cours du temps. La différence de pression entre l'entrée et la sortie du réacteur est maintenue à 8 10$^{-4}$ MPa. Après 5 minutes de fonctionnement, ce débit est de 250 l · h$^{-1}$. Après 25 minutes, il est de 255 l · h$^{-1}$. Il n'y a donc pas eu de modification sensible du débit au cours du temps.

Au cours du temps on observe une légère coloration des eaux résiduaires rejetées en (16).

Exemple 4

On a utilisé le même appareil qu'à l'exemple 3 et des conditions opératoires semblables. Seul le catalyseur a été remplacé par des granules d'alumine imprégné de 1 % de platine. Ces granules qui se présentent sous forme de sphères d'un diamètre moyen d'environ 7 mm sont vendus par Johnson Matthey and Co Ltd.

Après 5 minutes de fonctionnement, le débit d'oxygène est de 240 l · h⁻¹ et après 25 minutes il est toujours de 240 l · h⁻¹. Il n'y a donc pas eu de modification sensible du débit au cours du temps.

Les eaux résiduaires ne contiennent aucun résidu catalytique.

**Revendications**

1. Procédé continu pour l'obtention d'un produit gazeux (12) par réaction d'un réactif liquide selon lequel on introduit en continu le réactif liquide dans un réacteur (4) pour obtenir un produit gazeux et un produit liquide, caractérisé en ce qu'on maintient constante la différence positive entre la pression à l'entrée du réacteur (4) et la pression à la sortie du réacteur (4).

2. Procédé selon la revendication 1, caractérisé en ce que le réacteur (4) contient des particules solides de catalyseur.

3. Procédé selon l'une ou l'autre des revendications 1 et 2, caractérisé en ce que la différence de pression est de 0,000 1 à 0,01 MPa.

4. Procédé selon la revendication 1 appliqué à l'obtention d'oxygène par décomposition catalytique de peroxyde d'hydrogène selon lequel on introduit une solution aqueuse de peroxyde d'hydrogène dans un réacteur (4) contenant des particules solides d'un catalyseur de décomposition du peroxyde d'hydrogène pour former un mélange contenant de l'oxygène et de la vapeur d'eau, et on refroidit le mélange ainsi obtenu dans une zone de condensation (8) de manière à former une phase gazeuse contenant essentiellement de l'oxygène et une phase liquide contenant essentiellement de l'eau que l'on rejette (16), caractérisé en ce qu'on maintient constante la différence positive entre la pression de la solution aqueuse de peroxyde d'hydrogène à l'entrée du réacteur (4) et la pression de la phase gazeuse contenant essentiellement de l'oxygène dans la zone de condensation à la sortie du réacteur (4).

5. Procédé selon la revendication 4, caractérisé en ce qu'on met en œuvre une solution aqueuse contenant de 15 à 65 % en poids de peroxyde d'hydrogène.

6. Procédé selon l'une ou l'autre des revendications 4 et 5, caractérisé en ce que les particules solides de catalyseur contiennent un élément catalytique choisi parmi le plomb, le platine et le palladium.

7. Procédé selon la revendication 6, caractérisé en ce que le catalyseur est constitué de platine déposé sur de l'alumine.

8. Procédé selon l'une quelconque des revendications 1 à 7, caractérisé en ce que le réacteur (4) utilisé est un réacteur qui comporte dans sa partie supérieure une zone non noyée et exempte de catalyseur.

9. Appareil convenant pour la réalisation du procédé selon l'une quelconque des revendications 1 à 8, caractérisé en ce qu'un réservoir de stockage (1) du réactif liquide placé à un niveau élevé alimente un réservoir intermédiaire à niveau constant (3) ; ce dernier alimente un réacteur (4) disposé horizontalement et garni de particules solides par l'intermédiaire d'une canalisation comportant une vanne à débit réglable (5) et un clapet anti-retour (6) pour le contenu du réacteur (4) ; le réacteur (4) se trouve à un niveau inférieur au niveau constant du réservoir intermédiaire (3) ; une canalisation raccorde la sortie du réacteur (4) à un récipient (7) comportant un moyen de vidange (16) et deux canalisations relient le ciel du récipient respectivement au ciel du réservoir intermédiaire (3) par une conduite d'équilibrage de pression (17) comportant un clapet anti-retour (22) pour le contenu du réservoir intermédiaire (3) et à un échangeur de chaleur (8) qui est lui-même raccordé à la sortie (12) de l'appareil.

10. Appareil pour la réalisation du procédé selon l'une quelconque des revendications 1 à 8, caractérisé en ce qu'un réservoir de stockage (1) du réactif liquide alimente, par l'intermédiaire d'une canalisation comportant une pompe à pression réglable (19), un réacteur (4) disposé horizontalement et garni de particules solides ; une canalisation raccorde la sortie du réacteur (4) à un récipient (7) comportant un moyen de vidange (16) ; deux canalisations relient le ciel du récipient respectivement à un dispositif de mesure de pression (11) qui permet de régler la pompe à pression réglable (19) et à un échangeur de chaleur (8) qui est lui-même raccordé à la sortie (12) de l'appareil.

**Claims**

1. Continuous process for producing a gaseous product (12) by the reaction of a liquid reactant according to which the liquid reactant is introduced continuously into a reactor (4) to produce a gaseous product and a liquid product, characterized in that the positive difference between the pressure at the inlet of the reactor (4) and the pressure at the outlet of the reactor (4) is kept constant.

2. Process according to Claim 1, characterized in that the reactor (4) contains solid particles of catalyst.

3. Process according to either of Claims 1 and 2, characterized in that the pressure difference is from 0.000 1 to 0.01 MPa.

4. Process according to Claim 1, applied to the production of oxygen by catalytic decomposition of hydrogen peroxide according to which an aqueous solution of hydrogen peroxide is introduced into a reactor (4) containing solid particles of a catalyst of decomposition of hydrogen peroxide in order to form a mixture containing oxygen and steam, and the mixture thus produced is cooled in a condensation zone (8) so as to form a gaseous phase containing essentially oxygen and a liquid phase containing essentially water which is rejected (16), characterized in that the positive difference between the pressure of the aqueous solution of hydrogen peroxide at the inlet of the reactor (4) and the pressure of the gaseous phase containing essentially oxygen in the condensation zone at the outlet of the reactor (4) is kept constant.

5. Process according to Claim 4, characterized in that an aqueous solution containing from 15 to 65 % by weight of hydrogen peroxide is employed.

6. Process according to either of Claims 4 and 5, characterized in that the solid particles of catalyst contain a catalytic element chosen from lead, platinum and palladium.

7. Process according to Claim 6, characterized in that the catalyst consists of platinum deposited on alumina.

8. Process according to any one of Claims 1 to 7, characterized in that the reactor (4) employed is a reactor which in its upper part comprises a zone which is not submerged and is free from catalyst.

9. Apparatus which is suitable for implementing the process according to any one of Claims 1 to 8, characterized in that a stock vessel (1) for the liquid reactant placed at a high level feeds a constant-level intermediate storage vessel (3) ; the latter feeds a reactor (4) arranged horizontally and packed with solid particles by means of a pipeline incorporating a variable-flow valve (5) and a nonreturn valve (6) for the contents of the reactor (4) ; the reactor (4) is at a level which is below the constant level of the intermediate storage tank (3) ; a pipeline connects the outlet of the reactor (4) to a receiver (7) comprising a means of draining (16) and two pipelines connect the overhead space of the receiver respectively to the overhead space of the intermediate storage tank (3) via a pressure-balancing line (17) incorporating a non-return valve (22) for the contents of the intermediate storage vessel (3) and to a heat exchanger (8) which is itself connected to the outlet (12) of the apparatus.

10. Apparatus for implementing the process according to any one of Claims 1 to 8, characterized in that a stock vessel (1) for the liquid reactant feeds, through the intermediacy of a pipeline incorporating a variable-pressure pump (19) a reactor (4) arranged horizontally and packed with solid particles ; a pipeline connects the outlet of the reactor (4) to a receiver (7) comprising a means of draining (16) ; two pipelines connect the overhead space of the receiver respectively to a pressure-measuring device (11) which makes it possible to regulate the variable-pressure pump (19) and to a heat exchanger (8) which is itself connected to the outlet (12) of the apparatus.

## Patentansprüche

1. Kontinuierliches Verfahren zur Gewinnung eines gasförmigen Produkts (12) durch Reaktion eines flüssigen Reagens, wobei man kontinuierlich das flüssige Reagens in einen Reaktor (4) einführt, um ein gasförmiges Produkt und ein flüssiges Produkt zu erhalten, dadurch gekennzeichnet, daß man die positive Differenz zwischen dem Druck am Einlaß des Reaktors (4) und dem Druck am Auslaß des Reaktors (4) konstant hält.

2. Verfahren nach Anspruch 1, dadurch gekennzeichnet, daß der Reaktor (4) feste Katalysatorteilchen enthält.

3. Verfahren nach dem einen oder dem anderen der Ansprüche 1 und 2, dadurch gekennzeichnet, daß die Druckdifferenz zwischen 0,000 1 und 0,01 MPa liegt.

4. Verfahren nach Anspruch 1 angewandt zur Gewinnung von Sauerstoff durch katalytische Zersetzung von Wasserstoffperoxyd, wobei man eine wässrige Wasserstoffperoxydlösung in einen Reaktor (4) einführt, der feste Teilchen eines Katalysators zur Zersetzung von Wasserstoffperoxyd enthält, um ein Gemisch zu bilden, das Sauerstoff und Wasserdampf enthält, und man das derart erhaltene Gemisch in einer Kondensationszone (8) abkühlt, um eine gasförmige Phase, die im wesentlichen Sauerstoff enthält und eine flüssige Phase, die im wesentlichen Wasser enthält, das man ausscheidet (16), zu bilden, dadurch gekennzeichnet, daß man die positive Differenz zwischen dem Druck der wässrigen Wasserstoffperoxydlösung am Einlaß des Reaktors (4) und dem Druck der gasförmigen Phase, die im wesentlichen Sauerstoff in der Kondensationszone am Auslaß des Reaktors (4) enthält, konstant hält.

5. Verfahren nach Anspruch 4, dadurch gekennzeichnet, daß man eine wässrige Lösung verwendet, die 15 bis 65 Gew.-% Wasserstoffperoxyd enthält.

6. Verfahren nach dem einen oder dem anderen der Ansprüche 4 und 5, dadurch gekennzeichnet, daß die festen Katalysatorteilchen ein unter Blei, Platin und Palladium ausgewähltes katalytisches Element enthalten.

7. Verfahren nach Anspruch 6, dadurch gekennzeichnet, daß der Katalysator aus auf Aluminium niedergeschlagenem Platin besteht.

8. Verfahren nach einem der Ansprüche 1 bis 7, dadurch gekennzeichnet, daß der benutzte Reaktor (4) ein Reaktor ist, der in seinem Oberteil eine nicht überschwemmte und katalysatorfreie Zone umfaßt.

9. Vorrichtung geeignet zur Verwirklichung des Verfahrens nach einem der Ansprüche 1 bis 8, dadurch gekennzeichnet, daß ein Vorratsbehälter (1) des flüssigen Reagens, der sich auf einem erhöhten Niveau befindet, einen Zwischenbehälter auf konstantem Niveau (3) versorgt ; letzterer einen Reaktor (4), der horizontal angeordnet und mit festen Teilchen versehen ist, durch das Zwischenstück einer Rohrleitung versorgt, die einen Schieber regelbaren Durchsatzes (5) und ein Rückschlagventil (6) für den Inhalt des Reaktors (4) umfaßt ; sich der Reaktor (4) auf einem Niveau unter dem konstanten Niveau des Zwischenbehälters (3) befindet ; eine Rohrleitung den Auslaß des Reaktors (4) mit einem Gefäß (7) verbindet, das eine Entleerungseinrichtung (16) und zwei Rohrleitungen umfaßt, die die Decke des Gefäßes mit der Decke des Zwischenbehälters (3), durch eine Druckausgleichsleitung (17), die ein Rückschlagventil (22) für den Inhalt des Zwischenbehälters (3) umfaßt, bzw. mit einem Wärmetauscher (8), der selbst an den Auslaß (12) der Vorrichtung angeschlossen ist, verbinden.

10. Vorrichtung zur Verwirklichung des Verfahrens nach einem der Ansprüche 1 bis 8, dadurch gekennzeichnet, daß ein Vorratsbehälter (1) des flüssigen Reagens durch das Zwischenstück einer Rohrleitung, die eine regelbare Druckpumpe (19) umfaßt, einen Reaktor (4) versorgt, der horizontal angeordnet und mit festen Teilchen versehen ist ; eine Rohrleitung den Auslaß des Reaktors (4) mit einem Gefäß (7) verbindet, das eine Entleerungseinrichtung (16) umfaßt ; zwei Rohrleitungen die Decke des Gefäßes mit einer Vorrichtung zur Druckmessung (11), die züläßt, die regelbare Druckpumpe (19) zu regeln, bzw. mit einem Wärmetauscher (8), der selbst an den Auslaß (12) der Vorrichtung angeschlossen ist, verbinden.

## Fig. 1

## Fig. 2

## Fig. 3

## Fig. 4

## Fig. 5

Fig. 6

# Fig. 7